# EUROPEAN PATENT SPECIFICATION

(11) **EP 4 605 107 B1**
(45) Date of publication and mention of the grant of the patent: **22.07.2026**
(21) Application number: 23793272.8
(22) Date of filing: 17.10.2023
(51) Int. Cl.: B01D 45/16, B04C 5/00, B04C 5/20

(54) **APPARATUS FOR SEPARATING A SOLIDS-CONTAINING AND MOLTEN SALT CONTAINING STREAM**
VORRICHTUNG ZUM TRENNEN EINES FESTSTOFFHALTIGEN STROMS
APPAREIL POUR SÉPARER UN COURANT CONTENANT DES SOLIDES

(30) Priority: 21.10.2022 US 202263380512 P; 01.11.2022 EP 22204843
(43) Date of publication of application: 27.08.2025
(73) Proprietor: Shell Internationale Research Maatschappij B.V., 2596 HR The Hague (NL)
(72) Inventor: CUI, Zhe, Houston, Texas 77082-3101 (US); SPANU, Leonardo, Houston, Texas 77082-3101 (US)
(74) Representative: Shell Legal Services IP
(86) International application number: PCT/EP2023/078765
(87) International publication number: WO 2024/083786

(56) References cited:
- CA-A- 611 386
- CN-A- 109 373 335
- CN-A- 113 446 878
- CN-A- 114 702 159
- CN-U- 202 238 354
- US-A- 2 863 821

## Description

The present invention relates to an apparatus for separating a solids-containing and molten salt containing stream.

Apparatuses for separating solids-containing streams are known in the art. As a mere example, a combination of a cyclone and hopper has been used for decades for separating solids-containing streams.

As a mere example, US 2 863 821 discloses in Fig. 2 the use of a cyclone (64) and a hopper (51) in a fluid coking vessel wherein the product vapor solids-gas separators are internally located in the vessel and the temperature of fluid bed is maintained by a transfer line burner system. This kind of apparatuses are not intended for processing a (solids-containing and) molten salt containing stream.

A problem of solids-containing streams coming from **e.g.** a methane pyrolysis reactor is that the carbon particles from the methane pyrolysis reactor can contain a certain level of molten salt. This molten salt can induce particle agglomeration leading to plugging of piping and negatively impacting the quality of the eventual carbon product.

CN114405827A discloses a method for separating carbon materials in molten salt, which method contains the following five steps:
(1) crushing and pulverizing the mixed product of the salt and the carbon in a pulverizer;
(2) grinding the crushed and pulverized salt-carbon mixture in a ball mill;
(3) putting the ground salt-carbon mixture into a porous sieve for sieving;
4) placing the screened salt-carbon mixture on a wind separation platform, and carrying out wind separation at a certain wind speed and a certain height of the sample platform; and
(5) respectively collecting salt carbon products in the two settling areas.

A disadvantage of this method disclosed in CN114405827A is that it is quite elaborate.

A further disadvantage of the method disclosed in CN114405827A is that, after separation, there is still about 7 wt.% of molten salt impurities in the carbon product obtained, impacting the value of the carbon product significantly. CN 114 702 159 A, CN 109 373 335 A and CN 202 238 354 U show other relevant prior art documents.

It is an object of the present invention to solve, minimize or at least reduce one or more of the above problems associated with the handling of a solids-containing and molten salt containing stream.

It is a further object of the present invention to provide an alternative apparatus for separating a solids-containing and molten salt containing stream originating from a methane pyrolysis reactor.

It is an even further object of the present invention to provide an apparatus and method to provide a purified carbon product stream by removing molten salt impurities from the carbon products, in particular as obtained in a methane pyrolysis reactor.

One or more of the above or other objects may be achieved according to the present invention by providing an apparatus for separating a solids-containing and molten salt containing stream, the apparatus at least comprising:
- a cyclone separator having an inlet for a solids-containing and molten salt containing stream to be separated, a bottom dipleg outlet for a wet solids stream and an overhead outlet for a gas stream;
- a hopper containing an overhead inlet, an overhead outlet and a bottom outlet, wherein the overhead inlet of the hopper is fluidly connected with the bottom dipleg outlet of the cyclone separator; and
- a heater for heating wet solids in the hopper;
wherein a pressure reducing pump is connected to an overhead space in the hopper defined by the walls of the hopper and the surface level of wet solids in the hopper.

It has surprisingly been found according to the present invention that by using the apparatus according to the present invention the molten salt can be removed from the (typically carbon-containing) solids stream by (sublimation and) vaporization in a surprisingly simple manner. As a result, the agglomeration of particles is minimized and a solids stream with higher purity can be removed from the apparatus.

A further advantage of the apparatus according to the present invention is that during use of the apparatus according to the present invention, a carbon solids product can be purified at a high temperature, typically directly obtained from a preceding methane pyrolysis reactor (i.e. without first cooling down). This leads to a higher overall energy efficiency and less waste stream generation (such as waste water), compared to the usual process where a carbon solids product needs to cool down first for the subsequent purification using e.g. a water wash or other method.

As the person skilled in the art is familiar with a cyclone separator, a hopper, a pressure reducing pump and a heater per se, these will not be discussed here in detail.

As mentioned above, the cyclone separator has an inlet for a solids-containing and molten salt containing stream to be separated, a bottom dipleg outlet for a wet solids stream (containing some liquid molten salt impurities) and an overhead outlet for a gas stream. The person skilled in the art will readily understand that further inlets and outlets may be present.

Preferably, the inlet for a solids-containing and molten salt containing stream to be separated is connected to the outlet of a methane pyrolysis reactor. In other words, the apparatus according to the present invention is preferably preceded by a methane pyrolysis reactor.

Typically (and preferably), the inlet for the solids-containing and molten salt containing stream is a tangential or involute inlet.

According to a preferred embodiment of the apparatus according to the present invention, the bottom dipleg outlet of the cyclone separator opens into the hopper below the surface level of the wet solids in the hopper.

As also mentioned above, the hopper contains an overhead inlet, an overhead outlet and a bottom outlet, wherein the overhead inlet of the hopper is fluidly connected with the bottom dipleg outlet of the cyclone separator. Again, the person skilled in the art will readily understand that further inlets and outlets may be present.

Preferably, the hopper is placed below the cyclone separator.

As further mentioned above, the apparatus comprises a pressure reducing pump connected to the overhead outlet of the cyclone separator. According to the present invention, a pressure reducing pump is connected to an overhead space in the hopper defined by the walls of the hopper and the surface level of wet solids in the hopper.

As also mentioned above, the apparatus comprises a heater which during use can heat wet solids in the hopper thereby allowing (sublimation and) vaporization of at least a part of the molten salt in the wet solids. Preferably, the heater can heat the wet solids in the hopper to at least 700°C, preferably at least 800°C, more preferably at least 950°C.

Preferably, the heater comprises an indirect heat exchanger containing heating tubing running through the inside of the hopper.

According to a preferred embodiment according to the present invention, the apparatus further comprises a controller connected to the pressure reducing pump to maintain sufficient vacuum in the hopper during use to vaporize molten salt in the wet solids in (preferably the lower part of) the hopper.

In a further aspect the present invention provides a process for separating a solids-containing and molten salt containing stream, in particular using the apparatus according to the present invention, the process at least comprising the steps of:
(a) providing a solids-containing and molten salt containing stream, wherein the solids-containing and molten salt containing stream comprises at least 1 wt.% of liquid molten salt based on the total amount of liquid and solid in the solids-containing and molten salt containing stream and
   wherein the solids-containing and molten salt containing stream comprises at least 50 wt.% of carbon solids based on the total amount of liquid and solid in the solids-containing and molten salt containing stream;
(b) feeding the solids-containing and molten salt containing stream provided in step (a) via an inlet into a cyclone separator;
(c) separating the solids-containing and molten salt containing stream in the cyclone separator thereby obtaining a wet solids stream and a gas stream;
(d) removing the wet solids stream from the cyclone separator via a bottom dipleg outlet and the gas stream via an overhead outlet;
(e) receiving the wet solids stream in a hopper via an overhead inlet, wherein the overhead inlet of the hopper is fluidly connected with the bottom dipleg outlet of the cyclone separator;
(f) heating the wet solids in the hopper to at least 700°C thereby allowing (sublimation and) vaporization of at least a part of the molten salt in the wet solids;
(g) removing solids from the hopper via a bottom outlet thereof; and
(h) removing gas from the hopper via an overhead outlet using a pressure reducing pump connected to the overhead outlet of the hopper.

In step (a) of the process according to the present invention, a solids-containing and molten salt containing stream is provided. Although the solids-containing and molten salt containing stream provided in step (a) is not particularly limited, it is typically a 3-phase stream, i.e. containing gas, liquid and solids. Preferably the solids-containing and molten salt containing stream originates from a methane pyrolysis reactor.

Preferably, the solids-containing and molten salt containing stream provided in step (a) comprises at least 5 wt.% of liquid based on the total amount of liquid and solid in the solids-containing and molten salt containing stream, more preferably at least 10 wt.%, even more preferably at least 25 wt.%. Typically, the solids-containing and molten salt containing stream provided in step (a) comprises at most 50 wt.% liquid. Preferably the liquid is molten salt. The molten salt is not particularly limited and can be selected from a wide variety of molten salts such as NaCl, KCl, CaCl₂, MgCl₂, NaNO₃, KNO₃, Ca(NO₃)₂, Mg(NO₃)₂ or mixtures of these salts. Preferably, the molten salt is selected from the group consisting of NaCl, KCl, CaCl₂, NaNO₃, KNO₃, Ca(NO₃)₂, more preferably NaCl, KCl. It is especially preferred that the molten salt has a melting point or range that lies between 500-800°C.

According to the present invention, the solids-containing and molten salt containing stream provided in step (a) comprises at least 50 wt.% of carbon solid based on the total amount of liquid and solid in the solids-containing and molten salt containing stream, preferably at least 75 wt.%, more preferably at least 90 wt.%.

Further it is preferred that the solids-containing and molten salt containing stream provided in step (a) comprises at most 90 wt.% gas, preferably at most 95 wt.%, based on the total (gas, liquid and solid) stream provided in step (a).

Typically, the gas contains more than 50 vol.% H₂, and less than 50 vol.% CH₄, preferably more than 75 vol.% H₂ and less than 25 vol.% CH₄.

According to an especially preferred embodiment of the process according to the present invention, the solids-containing and molten salt containing stream provided in step (a) has a temperature of at least 800°C, preferably at least 850°C (and typically at most 950°C). As mentioned above, the solids-containing and molten salt containing stream provided in step (a) is preferably obtained directly from a preceding methane pyrolysis reactor (without first cooling down).

In step (b) of the process according to the present invention, the solids-containing and molten salt containing stream provided in step (a) is fed via an inlet into a cyclone separator.

In step (c) of the process according to the present invention, the solids-containing and molten salt containing stream is separated in the cyclone separator thereby obtaining a wet solids stream and a gas stream. According to the present invention with 'wet solids' stream is meant a solid-containing stream that comprises at least 1 wt.% of liquid based on the total amount of liquid and solid in the stream. Please note in this respect that the 'wetness' does not refer to the presence of water (but rather to the presence of molten salt).

In step (d) of the process according to the present invention, the wet solids stream is removed from the cyclone separator via a bottom dipleg outlet and the gas stream via an overhead outlet.

In step (e) of the process according to the present invention, the wet solids stream is received in a hopper via an overhead inlet, wherein the overhead inlet of the hopper is fluidly connected with the bottom dipleg outlet of the cyclone separator.

Preferably, the bottom dipleg outlet of the cyclone separator opens into the hopper below the surface level of the wet solids in the hopper.

In step (f) of the process according to the present invention, the wet solids in the hopper are heated to at least 700°C thereby allowing (sublimation and) vaporization of at least a part of the molten salt in the wet solids.

According to a particularly preferred embodiment of the process according to the present invention, in step (f) sufficient vacuum is maintained in the hopper to vaporize liquid molten salt in the wet solids in the hopper, preferably in the bottom part thereof. Preferably a vacuum of at most 500 Pa, preferably at most 200 Pa is maintained (and typically above 50 Pa). Preferably, in step (f) the wet solids are heated to at least 800°C, more preferably at least 950°C.

In step (g) of the process according to the present invention, solids are removed from the hopper via a bottom outlet thereof. Typically, the removed solids stream is a carbon solids-enriched stream (containing at least 99.0 wt.% carbon solids). The carbon solids-enriched stream is the aimed-for product of the process and can be used as carbon material for various applications.

In step (h) of the process according to the present invention, gas is removed from the hopper via an overhead outlet using a pressure reducing pump connected to the overhead outlet of the hopper. Typically, the removed gas contains (sublimized and) vaporized molten salt.

Hereinafter the present invention will be further illustrated by the following non-limiting drawings. Herein shows:

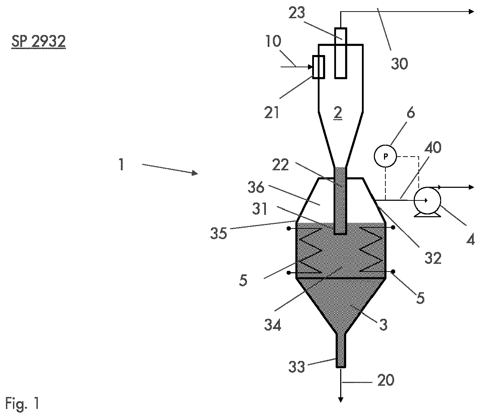

Fig. 1 schematically an apparatus for separating a solids-containing and molten salt containing stream, according to the present invention.

For the purpose of this description, same reference numbers refer to same or similar components.

The apparatus as shown in Figure 1 generally referred to with reference number 1, shows a cyclone separator 2, a hopper 3, a pressure reducing pump 4 and a heater 5.

The cyclone separator 2 has an inlet 21 for a solids-containing and molten salt containing stream 10 to be separated, a bottom dipleg outlet 22 for a wet solids stream and an overhead outlet 23 for a gas stream. Preferably the solids-containing and molten salt containing stream 10 originates from a methane pyrolysis reactor (not shown); in such a case, the inlet 21 of the cyclone separator 2 is connected to an outlet of said methane pyrolysis reactor.

The hopper 3 contains an overhead inlet 31, an overhead outlet 32 and a bottom outlet 33, wherein the overhead inlet 31 of the hopper 3 is fluidly connected with the bottom dipleg outlet 22 of the cyclone separator 2.

In the embodiment of Fig. 1, the bottom dipleg outlet 22 of the cyclone separator 2 opens into the hopper 3 below the surface level 35 of the wet solids 34 in the hopper 3.

In the embodiment of Fig. 1, the pressure reducing pump 4 is connected to an overhead space 36 in the hopper 3 defined by the walls of the hopper 3 and the surface level 35 of wet solids in the hopper 3.

The heater 5 can - during use - heat wet solids 34 in the hopper 3, preferably to a temperature of at least 700°C.

Further shown in Fig. 1 is a a controller (6) to maintain sufficient vacuum in the hopper 3 during use to help vaporize molten salt contained in the wet solids 34 in the hopper 3.

During use of the apparatus of Fig. 1, a solids-containing and molten salt containing stream 10 is provided (as mentioned, preferably directly originating from a methane pyrolysis reactor, without cooling off) and fed via the inlet 21 into the cyclone separator 2.

In the cyclone separator 2 the solids-containing and molten salt containing stream is separated thereby obtaining a wet solids stream and a gas stream. The wet solids stream is removed from the cyclone separator 2 via the bottom dipleg outlet 22, whilst the gas stream is removed via the overhead outlet 23 as stream 30.

The wet solids stream is received in the hopper 3 via the overhead inlet 31 of the hopper, wherein the overhead inlet 31 of the hopper 3 is fluidly connected with the bottom dipleg outlet 22 of the cyclone separator 2.

In the hopper 3 the wet solids 34 are heated using the heater 5 thereby allowing (sublimation and) vaporization of at least a part of the molten salt in the wet solids 34.

Solids are removed from the hopper 3 via the bottom outlet 33 thereof as stream 20 and gas (containing (sublimized and) vaporized molten salt) is removed as stream 40 from the hopper 3 via the overhead outlet 32 using the pressure reducing pump 4 connected to the overhead outlet 32 of the hopper 3.

Preferably, sufficient vacuum is maintained in the hopper 3 to help vaporizing the molten salt in the wet solids 34 in the hopper 3.

### Example

The apparatus of Fig. 1 was used for illustrating the separating of a solids-containing and molten salt containing stream in a non-limiting manner.

A solids-containing and molten salt containing gas stream was obtained from a 2 inch (diameter) methane pyrolysis molten salt reactor and analysed. The pyrolysis temperature used was 950°C and the pressure 1 bara. In the Example, as molten salt a mixture of 50 wt.% NaCl and 50 wt.% KCl was used.

The compositions and conditions of the fluid (i.e. gas, liquid and solid) streams in the various flow lines are provided in Table 1 below (V means vapour, whilst L means liquid and S solid). The volumetric flowrate of stream 10 was 1.67 l/min. The composition of stream 10 is shown in Table 1: 24.5 wt.% H₂ (g); 65.5 wt.% CH₄ (g); 5.0 wt.% C (s); and 5.0 wt.% molten salt (1).

The values in Table 1 were calculated using a model generated with commercially available Aspen Plus software. The composition of the gas stream 30 and the purified solid carbon composition was experimentally measured using GC and SEM. The simulation results showed that when the inlet stream 10 was 100 g, there was 5.03 g of solids stream 20, 53.6 g vapour stream 30 and 41.4 g vapour stream 40.

**Table 1**

| Fluid stream | 10 | 20 | 30 | 40 |
|---|---|---|---|---|
| Phase | V/L/S | S | V | V |
| T [°C] | 850 | 950 | 850 | 950 |
| p [bara] | 1.0 | 0.01 | 1.0 | 0.1 |
| H₂ [wt.%] | 24.5 | - | 27.3 | 24.0 |
| CH₄ [wt.%] | 65.5 | - | 72.7 | 64.0 |
| C [wt.%] | 5.0 | 99.4 | - | - |
| Molten salt [wt.%] | 5.0 | 0.6 | - | 12.0 |

### Example 2

Carbon product purification with vaporization (and sublimation) was also investigated experimentally. Raw carbon product (containing about 75 wt.% NaCl/KCl salt) from a methane pyrolysis reactor was used. The raw carbon was loaded into a crucible with nitrogen purging. Vacuum (100 Pa) was applied to the carbon product at 950°C.

Table 2 below shows the composition change of the carbon material before and after vaporization (and sublimation). It is clearly shown that with vaporization (and sublimation) at the indicated operating conditions (100 Pa, 950°C), the salt impurities can be effectively removed from the carbon product. As a result, a carbon product of >99.0 wt.% purity can be achieved.

**Table 2**

| | C [wt. %] | Na [wt.%] | Cl [wt. %] | K [wt.%] | salt [wt. %] |
|---|---|---|---|---|---|
| Before vaporization | 25.2 | 13.5 | 43.5 | 17.8 | 74.8 |
| After vaporization | 99.1 | 0.3 | 0.4 | 0.3 | 0.9 |

### Discussion

As can be seen from Fig. 1 and the simulation in Table 1, the process according to the present invention allows for a surprisingly simple and effective way of separating a solids-containing and molten salt containing stream resulting in a relatively pure (99.4 wt.%) carbon product. The surprising effect as achieved according to the present invention was confirmed in an experimental example (Example 2, Table 2).

## Claims

1. An apparatus (1) for separating a solids-containing and molten salt containing stream (10), the apparatus (1) at least comprising:
- a cyclone separator (2) having an inlet (21) for a solids-containing and molten salt containing stream (10) to be separated, a bottom dipleg outlet (22) for a wet solids stream and an overhead outlet (23) for a gas stream;
- a hopper (3) containing an overhead inlet (31), an overhead outlet (32) and a bottom outlet (33), wherein the overhead inlet (31) of the hopper (3) is fluidly connected with the bottom dipleg outlet (22) of the cyclone separator (2); and
- a heater (5) for heating wet solids (34) in the hopper (3);
wherein a pressure reducing pump (4) is connected to an overhead space (36) in the hopper (3) defined by the walls of the hopper and the surface level (35) of wet solids in the hopper (3).

2. The apparatus (1) according to claim 1, wherein the heater (5) can heat the wet solids (34) in the hopper (3) to at least 700°C, preferably at least 800°C, more preferably at least 950°C.

3. The apparatus (1) according to any one of the preceding claims, further comprising a controller (6) connected to the pressure reducing pump (4) to maintain sufficient vacuum in the hopper (3) during use to vaporize molten salt in the wet solids (34) in the hopper (3).

4. A process for separating a solids-containing and molten salt containing stream (10), using the apparatus (1) according to any of the preceding claims, the process at least comprising the steps of:
(a) providing a solids-containing and molten salt containing stream (10), wherein the solids-containing and molten salt containing stream (10) comprises at least 1 wt.% of liquid molten salt based on the total amount of liquid and solid in the solids-containing and molten salt containing stream (10) and
wherein the solids-containing and molten salt containing stream comprises at least 50 wt.% of carbon solids based on the total amount of liquid and solid in the solids-containing and molten salt containing stream;
(b) feeding the solids-containing and molten salt containing stream (10) provided in step (a) via an inlet (21) into a cyclone separator (2);
(c) separating the solids-containing and molten salt containing stream in the cyclone separator (2) thereby obtaining a wet solids stream and a gas stream;
(d) removing the wet solids stream from the cyclone separator (2) via a bottom dipleg outlet (22) and the gas stream via an overhead outlet (23);
(e) receiving the wet solids stream in a hopper (3) via an overhead inlet (31), wherein the overhead inlet (31) of the hopper (3) is fluidly connected with the bottom dipleg outlet (22) of the cyclone separator (2);
(f) heating the wet solids (34) in the hopper (3) to at least 700°C thereby allowing vaporization of at least a part of the molten salt in the wet solids (34);
(g) removing solids from the hopper (3) via a bottom outlet (33) thereof; and
(h) removing gas from the hopper (3) via an overhead outlet (32) using a pressure reducing pump (4) connected to the overhead outlet (32) of the hopper (3).

5. The process according to claim 4, wherein the solids-containing and molten salt containing stream (10) provided in step (a) comprises at least 5 wt.% of liquid molten salt based on the total amount of liquid and solid in the solids-containing and molten salt containing stream (10), preferably at least 10 wt.%, more preferably at least 25 wt.%.

6. The process according to claim 4 or 5, wherein the solids-containing and molten salt containing stream (10) provided in step (a) comprises at most 90 wt.% gas, preferably at most 95 wt.%.

7. The process according to any one of the preceding claims 4-6, wherein the solids-containing and molten salt containing stream (10) provided in step (a) has a temperature of at least 800°C, preferably at least 850°C.

8. The process according to any one of the preceding claims 4-7, wherein in step (e) the bottom dipleg outlet (22) of the cyclone separator (2) opens into the hopper (3) below the surface level (35) of the wet solids (34) in the hopper (3).

9. The process according to any one of the preceding claims 4-8, wherein in step (f) sufficient vacuum is maintained in the hopper (3) to vaporize liquid molten salt in the wet solids (34).

10. The process according to any one of the preceding claims 4-9, wherein in step (f) the wet solids (34) are heated to at least 800°C, preferably at least 950°C.

## Patentansprüche

1. Einrichtung (1) zum Abscheiden eines Feststoffe enthaltenden und Salzschmelze enthaltenden Stroms (10), die Einrichtung (1) mindestens umfassend:
- einen Fliehkraftabscheider (2), der einen Einlass (21) für einen Feststoffe enthaltenden und Salzschmelze enthaltenden abzuscheidenden Strom (10), einen unteren Fallrohrauslass (22) für einen Strom nasser Feststoffe und einen Kopfauslass (23) für einen Gasstrom aufweist;
- einen Trichter (3), der einen Kopfeinlass (31), einen Kopfauslass (32) und einen unteren Auslass (33) enthält, wobei der Kopfeinlass (31) des Trichters (3) mit dem unteren Fallrohrauslass (22) des Fliehkraftabscheiders (2) fluidisch verbunden ist; und
- eine Heizvorrichtung (5) zum Erhitzen nasser Feststoffe (34) in dem Trichter (3);
wobei eine Druckminderungspumpe (4) mit einem Kopfraum (36) in dem Trichter (3) verbunden ist, der durch die Wände des Trichters und das Oberflächenniveau (35) nasser Feststoffe in dem Trichter (3) definiert ist.

2. Einrichtung (1) nach Anspruch 1, wobei die Heizvorrichtung (5) die nassen Feststoffe (34) in dem Trichter (3) auf mindestens 700 °C, vorzugsweise mindestens 800 °C, mehr bevorzugt mindestens 950 °C, erhitzen kann.

3. Einrichtung (1) nach einem der vorstehenden Ansprüche, ferner umfassend eine Steuerung (6), die mit der Druckminderungspumpe (4) verbunden ist, um während einer Verwendung ein ausreichendes Vakuum in dem Trichter (3) aufrechtzuerhalten, um Salzschmelze in den nassen Feststoffen (34) in dem Trichter (3) verdampfen zu lassen.

4. Verfahren zum Abscheiden eines Feststoffe enthaltenden und Salzschmelze enthaltenden Stroms (10) unter Verwendung
der Einrichtung (1) nach einem der vorstehenden Ansprüche, das Verfahren mindestens umfassend die Schritte:
(a) Bereitstellen eines Feststoffe enthaltenden und Salzschmelze enthaltenden Stroms (10), wobei der Feststoffe enthaltende und Salzschmelze enthaltende Strom (10) mindestens zu 1 Gew.-% flüssige Salzschmelze, basierend auf der Gesamtmenge an Flüssigkeit und Feststoff in dem Feststoffe enthaltenden und Salzschmelze enthaltenden Strom (10), umfasst und
wobei der Feststoffe enthaltende und Salzschmelze enthaltende Strom mindestens zu 50 Gew.-% Kohlenstofffeststoffe, basierend auf der Gesamtmenge an Flüssigkeit und Feststoff in dem Feststoffe enthaltenden und Salzschmelze enthaltenden Strom, umfasst;
(b) Zuführen des in Schritt (a) bereitgestellten Feststoffe enthaltenden und Salzschmelze enthaltenden Stroms (10) über einen Einlass (21) in einen Fliehkraftabscheider (2);
(c) Abscheiden des Feststoffe enthaltenden und Salzschmelze enthaltenden Stroms in dem Fliehkraftabscheider (2), wobei dadurch ein Strom nasser Feststoffe und ein Gasstrom erhalten werden;
(d) Entfernen des Stroms nasser Feststoffe aus dem Fliehkraftabscheider (2) über einen unteren Fallrohrauslass (22) und des Gasstroms über einen Kopfauslass (23);
(e) Aufnehmen des Stroms nasser Feststoffe in einem Trichter (3) über einen Kopfeinlass (31), wobei der Kopfeinlass (31) des Trichters (3) mit dem unteren Fallrohrauslass (22) des Fliehkraftabscheiders (2) fluidisch verbunden ist;
(f) Erhitzen der nassen Feststoffe (34) in dem Trichter (3) auf mindestens 700 °C, wobei dadurch die Verdampfung von mindestens einem Teil des geschmolzenen Salzes in den nassen Feststoffen (34) ermöglicht wird;
(g) Entfernen von Feststoffen aus dem Trichter (3) über einen unteren Auslass (33) davon; und
(h) Entfernen von Gas aus dem Trichter (3) über einen Kopfauslass (32) unter Verwendung einer Druckminderungspumpe (4), die mit dem Kopfauslass (32) des Trichters (3) verbunden ist.

5. Verfahren nach Anspruch 4, wobei der in Schritt (a) bereitgestellte, Feststoffe enthaltende und Salzschmelze enthaltende Strom (10) mindestens zu 5 Gew.-%, vorzugsweise mindestens zu 10 Gew.-%, mehr bevorzugt mindestens zu 25 Gew.-%, basierend auf der Gesamtmenge an Flüssigkeit und Feststoff in dem Feststoffe enthaltenden und Salzschmelze enthaltenden Strom (10), flüssige Salzschmelze umfasst.

6. Verfahren nach Anspruch 4 oder 5, wobei der in Schritt (a) bereitgestellte, Feststoffe enthaltende und Salzschmelze enthaltende Strom (10) höchstens zu 90 Gew.-%, vorzugsweise höchstens zu 95 Gew.-%, Gas umfasst.

7. Verfahren nach einem der vorstehenden Ansprüche 4 bis 6, wobei der in Schritt (a) bereitgestellte, Feststoffe enthaltende und Salzschmelze enthaltende Strom (10) eine Temperatur von mindestens 800 °C, vorzugsweise mindestens 850 °C, aufweist.

8. Verfahren nach einem der vorstehenden Ansprüche 4 bis 7, wobei in Schritt (e) der untere Fallrohrauslass (22) des Fliehkraftabscheiders (2) unterhalb des Oberflächenniveaus (35) der nassen Feststoffe (34) in dem Trichter (3) in den Trichter (3) mündet.

9. Verfahren nach einem der vorstehenden Ansprüche 4 bis 8, wobei in Schritt (f) ein ausreichendes Vakuum in dem Trichter (3) aufrechterhalten wird, um flüssige Salzschmelze in den feuchten Feststoffen (34) verdampfen zu lassen.

10. Verfahren nach einem der vorstehenden Ansprüche 4 bis 9, wobei in Schritt (f) die nassen Feststoffe (34) auf mindestens 800 °C, vorzugsweise mindestens 950 °C, erhitzt werden.

## Revendications

1. Appareil (1) permettant de séparer un flux (10) contenant des solides et contenant du sel fondu, l'appareil (1) comprenant au moins :
- un séparateur cyclonique (2) ayant une entrée (21) pour un flux (10) contenant des solides et contenant du sel fondu à séparer, une sortie de jambe de descente inférieure (22) pour un flux de solides humides et une sortie de tête (23) pour un flux de gaz ;
- une trémie (3) contenant une entrée de tête (31), une sortie de tête (32) et une sortie inférieure (33), dans lequel l'entrée de tête (31) de la trémie (3) est reliée fluidiquement à la sortie de jambe de descente inférieure (22) du séparateur cyclonique (2) ; et
- un dispositif de chauffage (5) pour chauffer des solides humides (34) dans la trémie (3) ;
dans lequel une pompe de réduction de pression (4) est reliée à un espace de tête (36) dans la trémie (3) défini par les parois de la trémie et le niveau de surface (35) de solides humides dans la trémie (3).

2. Appareil (1) selon la revendication 1, dans lequel le dispositif de chauffage (5) peut chauffer les solides humides (34) dans la trémie (3) à au moins 700 °C, de préférence au moins 800 °C, plus préférablement au moins 950 °C.

3. Appareil (1) selon l'une quelconque des revendications précédentes, comprenant en outre un dispositif de commande (6) relié à la pompe de réduction de pression (4) pour maintenir un vide suffisant dans la trémie (3) pendant l'utilisation pour vaporiser du sel fondu dans les solides humides (34) dans la trémie (3).

4. Procédé permettant de séparer un flux (10) contenant des solides et contenant du sel fondu, à l'aide de l'appareil (1) selon l'une quelconque des revendications précédentes, le procédé comprenant au moins les étapes consistant à :
(a) fournir un flux (10) contenant des solides et contenant du sel fondu, dans lequel le flux (10) contenant des solides et contenant du sel fondu comprend au moins 1 % en poids de sel fondu liquide en fonction de la quantité totale de liquide et de solide dans le flux (10) contenant des solides et contenant du sel fondu et
dans lequel le flux contenant des solides et contenant du sel fondu comprend au moins 50 % en poids de solides carbonés en fonction de la quantité totale de liquide et de solide dans le flux contenant des solides et contenant du sel fondu ;
(b) alimenter le flux (10) contenant des solides et contenant du sel fondu fourni à l'étape (a) par l'intermédiaire d'une entrée (21) dans un séparateur cyclonique (2) ;
(c) séparer le flux contenant des solides et contenant du sel fondu dans le séparateur cyclonique (2), ce qui permet d'obtenir un flux de solides humides et un flux gazeux ;
(d) éliminer le flux de solides humides du séparateur cyclonique (2) par l'intermédiaire d'une sortie de jambe de descente inférieure (22) et le flux gazeux par l'intermédiaire d'une sortie de tête (23) ;
(e) recevoir le flux de solides humides dans une trémie (3) par l'intermédiaire d'une entrée de tête (31), dans lequel l'entrée de tête (31) de la trémie (3) est reliée fluidiquement à la sortie de jambe de descente inférieure (22) du séparateur cyclonique (2) ;
(f) chauffer les solides humides (34) dans la trémie (3) à au moins 700 °C, permettant de ce fait la vaporisation d'au moins une partie du sel fondu dans les solides humides (34) ;
(g) éliminer des solides de la trémie (3) par l'intermédiaire d'une sortie inférieure (33) de celle-ci ; et
(h) éliminer du gaz de la trémie (3) par l'intermédiaire d'une sortie de tête (32) à l'aide d'une pompe de réduction de pression (4) reliée à la sortie de tête (32) de la trémie (3).

5. Procédé selon la revendication 4, dans lequel le flux (10) contenant des solides et contenant du sel fondu fourni à l'étape (a) comprend au moins 5 % en poids de sel fondu liquide en fonction de la quantité totale de liquide et de solide dans le flux (10) contenant des solides et contenant du sel fondu, de préférence au moins 10 % en poids, plus préférablement au moins 25 % en poids.

6. Procédé selon la revendication 4 ou 5, dans lequel le flux (10) contenant des solides et contenant du sel fondu fourni à l'étape (a) comprend au plus 90 % en poids de gaz, de préférence au plus 95 % en poids.

7. Procédé selon l'une quelconque des revendications 4 à 6 précédentes, dans lequel le flux (10) contenant des solides et contenant du sel fondu fourni à l'étape (a) a une température d'au moins 800 °C, de préférence d'au moins 850 °C.

8. Procédé selon l'une quelconque des revendications 4 à 7 précédentes, dans lequel, à l'étape (e), la sortie de jambe de descente inférieure (22) du séparateur cyclonique (2) s'ouvre dans la trémie (3) sous le niveau de surface (35) des solides humides (34) dans la trémie (3).

9. Procédé selon l'une quelconque des revendications 4 à 8 précédentes, dans lequel à l'étape (f) un vide suffisant est maintenu dans la trémie (3) pour vaporiser le sel fondu liquide dans les solides humides (34).

10. Procédé selon l'une quelconque des revendications 4 à 9 précédentes, dans lequel, à l'étape (f), les solides humides (34) sont chauffés à au moins 800 °C, de préférence au moins 950 °C.
